# FASCICULE DE BREVET EUROPEEN

(11) **EP 0 609 119 B1**
(45) Date de publication et mention de la délivrance du brevet: **28.07.1999**
(21) Numéro de dépôt: 94400130.4
(22) Date de dépôt: 21.01.1994
(51) Int. Cl.: H05B 3/84, B60S 1/02

(54) **Vitrage chauffable électriquement**
Elektrisch beheizbare Glasscheibe
Electrically heatable window

(30) Priorité: 23.01.1993 DE 4301789
(43) Date de publication de la demande: 03.08.1994
(73) Titulaire: SAINT-GOBAIN VITRAGE, 92400 Courbevoie (FR); SEKURIT SAINT GOBAIN Deutschland GmbH & Co. KG, 52066 Aachen (DE)
(72) Inventeur: Schafer, Wolfgang, Dr., D-52074 Aachen (DE); Goerenz, Walter, D-52477 Alsdorf (DE); Kramling, Franz, Dr., D-52072 Aachen (DE)
(74) Mandataire: Muller, René

(56) Documents cités:
- GB-A- 751 468
- US-A- 2 843 713

## Description

La présente invention concerne un vitrage chauffable électriquement comportant une couche conductrice transparente et deux électrodes en forme de ruban montées parallèlement ou en substance parallèlement l'une à l'autre et pouvant chacune être connectée à un câble de branchement électrique.

Dans des vitrages chauffables de ce type, qui sont connus, par exemple par les documents DE 26 36 398 A1 et 36 44 297 A1, la couche conductrice transparente est faite d'une couche d'oxyde conductrice de l'électricité comme de l'oxyde d'étain ou de l'oxyde d'étain-indium ou d'une couche métallique, en particulier d'argent, qui est insérée entre d'autres couches de protection métalliques et/ou d'oxydes métalliques. Fréquemment, sur les électrodes sont, en outre, disposées des bandes de clinquant qui sont en contact électrique avec les électrodes et qui réduisent la résistance électrique des électrodes pour éviter une chute de tension à l'intérieur des électrodes. Un tel vitrage chauffable est connu, par exemple, par le document DE OS 39 37 346 A1.

Dans les vitrages chauffables électriquement, il est fréquemment exigé de chauffer la couche conductrice transparente non pas sur la totalité de la surface du vitrage, mais uniquement dans une zone sélectionnée. Dans ce cas, les électrodes sont montées, parallèlement l'une à l'autre, le long de deux côtés opposés l'un à l'autre de la zone à chauffer, à l'intérieur de la couche conductrice transparente. Dans le cas d'un tel agencement, des densités de courant élevées apparaissent forcément à l'intérieur de la couche conductrice dans les domaines de celle-ci entourant les extrémités des électrodes. Ceci conduit à des surchauffes locales de la couche conductrice en ces endroits et à une dégradation ou même à une destruction de la couche conductrice.

Pour éviter de telles surchauffes locales physiquement limitées de la couche conductrice, il est connu de prévoir, dans la couche conductrice, des interruptions sous la forme de fentes ou de lacunes par lesquelles les trajets de courant entre les électrodes sont limités de la manière souhaitée (document DE 36 44 297 A1). Cependant, les interruptions nécessaires à cet effet d'une part impliquent une opération supplémentaire et d'autre part sont visibles comme telles.

L'invention a pour but d'agencer un vitrage pourvu sur la totalité de sa surface d'une couche conductrice par une mise en contact avec des électrodes en forme de ruban qui se terminent à l'intérieur de la couche conductrice, de telle façon que des surchauffes nuisibles locales de la couche conductrice, aux extrémités des électrodes, soient évitées sans que des interruptions soient aménagées dans la couche conductrice.

Suivant l'invention, ce but est atteint par le fait que les électrodes, dans le sens de leur extension longitudinale, sont décalées latéralement l'une par rapport à l'autre et que l'amenée du courant de chauffage à la première électrode et le retour de ce courant à partir de l'autre électrode s'effectuent, l'un et l'autre, respectivement au niveau de l'extrémité d'électrode qui s'étend au-delà de la projection de l'électrode opposée.

Dans le cas du vitrage chauffable conforme à l'invention, la connexion des câbles de branchement électrique aux électrodes est effectuée chaque fois à l'extrémité des électrodes en forme de ruban qui s'étend plus loin dans la couche conductrice que l'extrémité opposée à celle-ci de l'autre électrode. Cette alimentation d'énergie en "diagonale", dans le cas d'un décalage latéral simultané des électrodes, a pour conséquence que les trajets de courant extérieurs extrêmes conjugués des électrodes opposées sont prolongés dans une mesure proportionnelle au décalage latéral. De cette façon, la résistance électrique entre les points d'extrémité des électrodes augmente et, par conséquent, le flux de courant diminue avec pour conséquence que la surchauffe de la couche dans le domaine de ces points d'extrémité diminue et, le cas échéant, est complètement évitée.

L'importance du décalage latéral réciproque des électrodes, c'est-à-dire la longueur de la section de l'électrode dépassant la projection de l'électrode opposée s'étendant dans la couche conductrice, peut dans ce cas être modifiée en fonction des dimensions géométriques de la zone de chauffage et de la grandeur des vitrages revêtus et ce, entre des limites relativement larges.

Dans un développement avantageux de l'invention, les électrodes sont faites de couches conductrices en forme de ruban présentant une résistance électrique qui aboutit à une chute de tension calculée à l'intérieur des électrodes, de sorte qu'à l'extrémité de l'électrode opposée à l'endroit de connexion du câble de branchement électrique, un potentiel électriquement nettement plus faible est chaque fois présent. De cette façon, conjointement avec l'alimentation électrique en diagonale, l'effet recherché d'une diminution du flux de courant dans le domaine des points d'extrémité est encore renforcé.

On obtient, par exemple, de bons résultats lorsque l'on applique des électrodes en forme de ruban faites d'une encre à cuire en argent conducteur présentant une résistance superficielle de 0,01 à 0,2 ohm. De telles électrodes ont normalement une épaisseur de 5 à 30 µm et une largeur de 1 à 2 cm. Dans ces conditions, elles présentent dans leur direction longitudinale, une résistance électrique comprise entre environ 0,1 et 10 ohms/m. Le domaine de la résistance électrique des électrodes, préféré pour l'invention, se situe entre 0,5 et 5 ohms/m. Ceci est valable au moins pour le cas des vitrages automobiles de dimensions courantes, qui sont pourvus de couches conductrices transparentes présentant une résistivité superficielle d'environ 2 à 10 ohms par carré. En particulier, les valeurs les plus favorables pour le dépassement latéral et pour la résistance des électrodes pour le format de vitrage en question et les dimensions géométriques de la zone chauffée qui est souhaitée peuvent être aisément déterminées par des expérimentations.

L'invention sera expliquée ci-après avec référence aux dessins annexés, dans lesquels :
la Fig. 1 illustre un vitrage pourvu d'une couche conductrice, présentant un domaine partiel chauffé selon l'état de la technique;
la Fig. 2 illustre un vitrage pourvu d'une couche conductrice, présentant un domaine partiel chauffé suivant l'invention, et
la Fig. 3 illustre un vitrage revêtu suivant l'invention, à géométrie irrégulière.

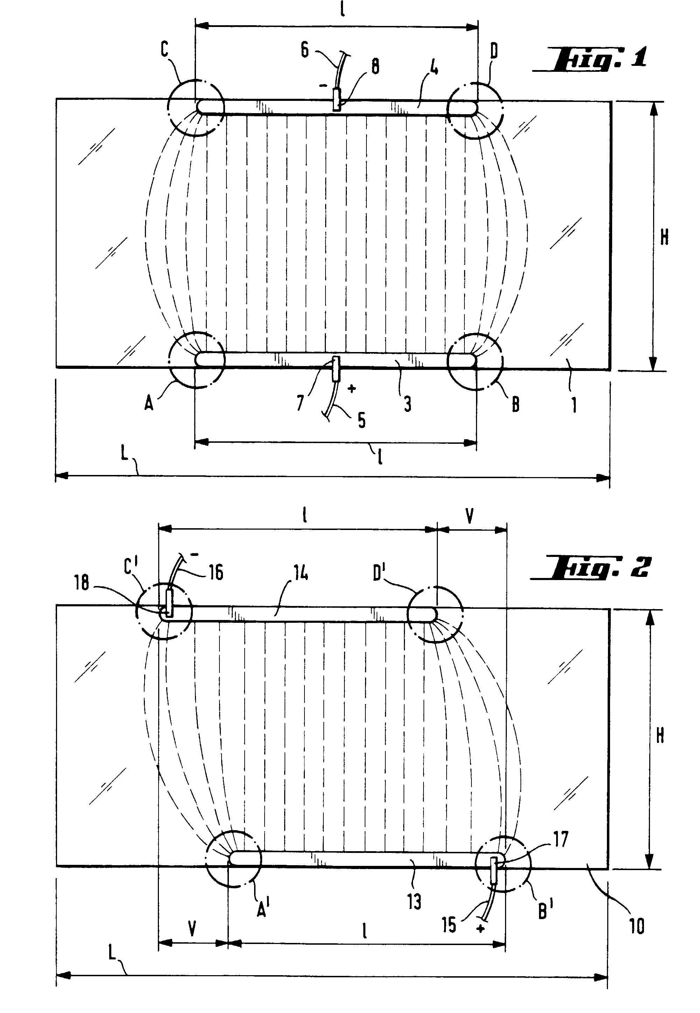

La Fig. 1 est une vue schématique d'un vitrage rectangulaire 1 dont la longueur L s'élève à 100 cm et la largeur H à 50 cm. Le vitrage 1 est pourvu, sur la totalité de sa surface, d'une couche mince transparente conductrice de l'électricité. Cette couche conductrice transparente a une résistivité superficielle de 3 à 4 ohms par carré. Le courant de chauffage est admis dans la couche conductrice transparente par l'intermédiaire de l'électrode 3 et le retour du courant s'effectue par l'intermédiaire de l'électrode 4. Etant donné que seul le domaine partiel médian du vitrage doit être chauffé, les électrodes 3, 4 qui sont disposées, en opposition l'une à l'autre, parallèlement aux bords longitudinaux du vitrage, ne s'étendent, dans le sens de leur longueur, que sur le domaine médian du vitrage 1. Dans le cas représenté, les électrodes 3, 4 ont une longueur 1 de 50 cm. La connexion des câbles de branchement électrique, représentés schématiquement, aux électrodes, s'effectue d'une manière symétrique au milieu des électrodes 3, 4, par des éléments de connexion électrique appropriés 7, 8 qui, ici également, sont représentés schématiquement et sont brasés aux électrodes. Les électrodes 3, 4 sont faites d'une encre à cuire du genre émail contenant de l'argent ou d'un vernis conducteur durcissant à froid.

Dans la zone chauffante proprement dite, entre les deux électrodes 3, 4, la répartition du courant dans la couche conductrice est relativement homogène, ce qui aboutit à un chauffage relativement uniforme de cette zone. Dans chacun des domaines A, B, C et D de la couche conductrice directement voisins des extrémités des électrodes apparaît cependant une densité de trajets de courant relativement élevée qui est due au fait que le courant ne s'écoule pas uniquement suivant le plus court trajet dans la zone entre les électrodes, mais qu'une fraction du courant s'écoule également à travers les domaines de la couche conductrice qui sont latéralement attenants, à l'extérieur des électrodes, ceci étant illustré par les lignes matérialisant les trajets de courant. Dans l'hypothèse où les électrodes 3, 4 présentent une conductivité élevée, c'est-à-dire que leur résistance superficielle est de pratiquement 0 ohm, on obtient le calcul théorique que la puissance par unité de surface dans les domaines A, B, C et D, suite aux densités de courant fortement accrues qui y règnent, vaut environ huit fois celle qui règne dans le reste de la zone chauffante homogène. Cette puissance par unité de surface fortement accrue entraîne une élévation de température d'une importance correspondante.

La Fig. 2 illustre un vitrage 10 chauffé partiellement qui est conçu conformément à l'invention. Il est à nouveau pourvu, sur la totalité de sa surface, d'une couche conductrice transparente continue, mais il ne sera chauffé électriquement que dans sa zone centrale.

Les dimensions L et H du vitrage 10 sont identiques à celles du vitrage 1. Les électrodes 13 et 14 ont également chacune une longueur 1 de 50 cm, mais elles sont décalées latéralement l'une par rapport à l'autre, la mesure V de ce décalage latéral étant d'environ 12 cm.

Les électrodes 13 et 14 sont à nouveau faites d'une encre à cuire contenant de l'argent. Dans ce cas, on utilise une encre à cuire qui, pour une épaisseur de couche de 20 µm, présente une résistance superficielle de 0,05 ohm. Pour une largeur des électrodes 13, 14 de 2 cm et une résistivité superficielle ou de couche de 0,05 ohm par carré, les électrodes dans le sens de leur longueur présentent une résistance électrique de 2,5 ohms/m. Cette résistance des électrodes aboutit à une nette chute de tension sur la longueur des électrodes.

De plus, dans ce cas, la connexion des électrodes 13, 14 au câble de branchement électrique correspondant 15, 14 s'effectue chaque fois au niveau de l'extrémité d'électrode dépassant latéralement l'autre électrode, et, à cet effet un élément de connexion électrique 17 est brasé sur l'extrémité dépassante de l'électrode 13 et un élément de connexion électrique 18 est brasé sur l'extrémité dépassante de l'électrode 14.

Dans le cas de ce vitrage chauffant 10, on obtient, dans les domaines des coins A', B', C' et D' une puissance par unité de surface qui n'est égale qu'à la moitié de celle obtenue dans le cas du vitrage chauffant décrit avec référence à la Fig. 1. Il en résulte certes également une élévation de température de la couche conductrice dans ces domaines, mais cette élévation de température reste bien en dessous des valeurs auxquelles la couche chauffante subirait des dommages permanents.

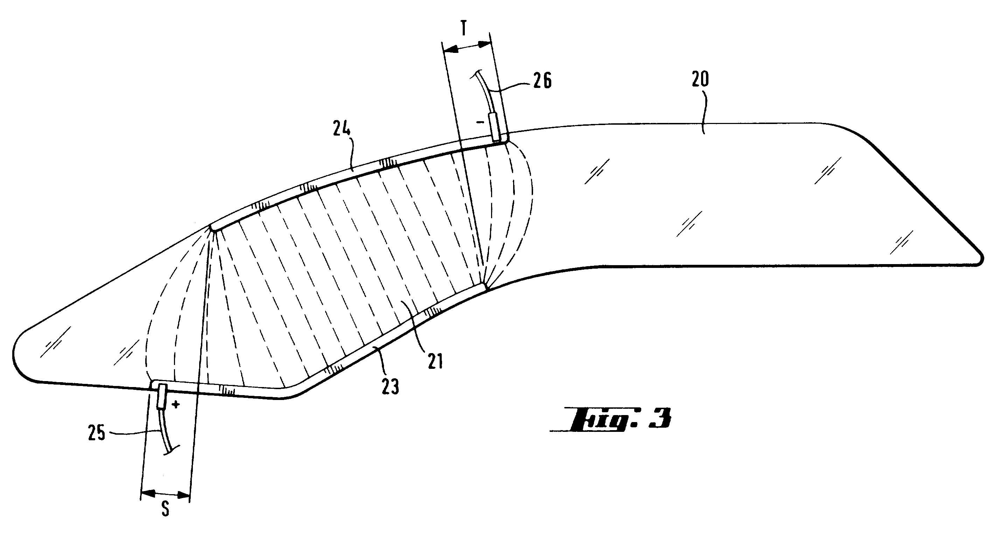

L'invention peut également être utilisée avec succès pour des vitrages présentant une géométrie inhabituelle ou défavorable. Un exemple d'un tel vitrage est illustré sur la Fig. 3. Dans ce cas, il s'agit d'une forme particulière d'une glace latérale de véhicule automobile. Le vitrage 20 est pourvu, sur la totalité de sa surface, d'une couche métallique transparente uniforme qui possède des propriétés de réflexion des rayons infrarouges et remplit, par conséquent, une fonction de protection solaire. En outre, le vitrage 20 doit être chauffé électriquement dans un domaine partiel 21. Dans ce cas, dans le domaine partiel 21 à chauffer, le long du bord inférieur du vitrage est prévue une électrode en forme de ruban 23, et le long du bord supérieur du vitrage, une électrode en forme de ruban 24. L'électrode inférieure 23 est prolongée de la section S au-delà de la projection de l'électrode 24 et l'électrode 24 est pour sa part prolongée de la section T au-delà de la projection de l'électrode 23. Les électrodes 23 et 24 sont faites d'une encre à cuire conductrice de l'électricité contenant de l'argent dont la teneur en argent, l'épaisseur de couche et la largeur sont choisies de façon que sa résistance dans le sens longitudinal s'élève environ à 2 ohms/m. Les câbles de branchement électrique 25 et 26 sont respectivement connectés à l'extrémité de la section de prolongement de l'électrode 23, et de l'électrode 24. Grâce à cet agencement, on obtient, le long des électrodes 23 et 24, chaque fois une chute de potentiel correspondant à la résistance électrique. Il en résulte que, même dans le cas d'une forme de vitrage aussi peu courante, on obtient une zone chauffée relativement homogène dépourvue d'endroits accusant une densité de courant excessive.

## Revendications

1. Vitrage chauffable électriquement, en particulier vitrage automobile, comportant sur la totalité de sa surface une couche conductrice transparente et deux électrodes en forme de ruban disposées parallèlement ou à peu près parallèlement l'une à l'autre et pouvant être connectées chacune à un câble de branchement électrique, **caractérisé en ce que** les électrodes (3, 4 ; 13, 14 ; 23, 24), dans le sens de leur extension longitudinale, sont décalées latéralement l'une par rapport à l'autre et que l'amenée du courant de chauffage à la première électrode ainsi que le retour du courant à partir de l'autre électrode s'effectuent, l'un et l'autre, à l'extrémité de la section d'électrode dépassant la projection de l'électrode opposée.

2. Vitrage chauffable électriquement suivant la revendication 1, **caractérisé en ce que** les électrodes en forme de ruban (3, 4 ; 13, 14; 23, 24) présentent, dans le sens de leur longueur, une résistance électrique de 0,5 à 5 ohms/m.

3. Vitrage chauffable électriquement suivant la revendication 2, **caractérisé en ce que** les électrodes en forme de ruban (3, 4 ; 13, 14 ; 23, 24) sont faites d'une encre à cuire conductrice de l'électricité ou d'un vernis durcissant à froid, conducteur de l'électricité.

## Patentansprüche

1. Elektrisch beheizbare Glasscheibe, insbesondere Autoglasscheibe, die auf ihrer gesamten Oberfläche eine transparente Leitschicht und zwei parallel oder annähernd parallel zueinander angeordneten streifenförmige, jeweils mit einem Stromzuleitungskabel verbindbaren Elektroden umfaßt, **dadurch gekennzeichnet,** daß die Elektroden (3,4; 13,14; 23,24;) in Richtung ihrer Längsausdehnung seitlich gegeneinander versetzt angeordnet sind, und daß die Einspeisung des Heizstroms in die eine Elektrode und seine Auskopplung aus der anderen Elektrode jeweils am Ende des über die Projektion der gegenüberliegenden Elektrode hinausragenden Abschnitts erfolgt.

2. Elektrisch beheizbare Glasscheibe nach Anspruch 1, **dadurch gekennzeichnet,** daß die streifenförmigen Elektroden (3,4; 13,14; 23,24;) in ihrer Längsrichtung einen elektrischen Widerstand von 0,5 bis 5 Ohm/m aufweisen.

3. Elektrisch beheizbare Glasscheibe nach Anspruch 2, **dadurch gekennzeichnet,** daß die streifenförmigen Elektroden (3,4; 13,14; 23,24) aus einer elektrisch leitenden Einbrennfarbe oder einem elektrisch leitenden kalthärtenden Leitlack bestehen.

## Claims

1. Electrically heatable glazing, particularly a car glazing, having over its entire surface a transparent, conductive layer and two electrodes in strip form arranged parallel or roughly parallel to one another and whereof each is connectable to an electric connecting cable, characterized in that in the direction of their longitudinal extension, the electrodes (3, 4; 13, 14; 23, 24) are laterally, mutually displaced and the supply of the heating current to the first electrode and the return of the current from the other electrode in each case take place at the end of the electrode section extending beyond the projection of the opposite electrode.

2. Electrically heatable glazing according to claim 1, characterized in that the strip electrodes (3, 4; 13, 14; 23, 24) have, in their lengthwise direction, an electrical resistance of 0.5 to 5 ohms/m.

3. Electrically heatable glazing according to claim 2, characterized in that the strip electrodes (3, 4; 13, 14; 23, 24) are formed from an electricity-conducting stoving ink or an electricity-conducting cold hardening varnish.
